# EUROPÄISCHE PATENTSCHRIFT

(11) **EP 0 456 175 B1**
(45) Veröffentlichungstag und Bekanntmachung des Hinweises auf die Patenterteilung: **04.08.1993**
(21) Anmeldenummer: 91107379.9
(22) Anmeldetag: 07.05.1991
(51) Int. Cl.: B62D 5/32, B60K 17/10

(54) **Hydrostatisches Antriebssystem für Fahrzeuge**
Hydrostatic drive system for vehicles
Système de commande hydrostatique pour véhicules

(30) Priorität: 11.05.1990 DE 4015122
(43) Veröffentlichungstag der Anmeldung: 13.11.1991
(73) Patentinhaber: Krauss-Maffei Aktiengesellschaft, 80997 München (DE)
(72) Erfinder: Pollner, Jürgen, Dipl.-Ing. (FH), W-8000 München 60 (DE); Trummer, Gregor, Dipl.-Ing. (FH), W-8134 Aschering (DE); Mölzer, Peter, Dipl.-Ing., W-8061 Schwabhausen (DE)

(56) Entgegenhaltungen:
- EP-A- 0 085 272
- DD-A- 255 508
- DE-A- 2 845 169
- DE-A- 2 947 552
- DE-A- 3 732 662

## Beschreibung

Die Erfindung betrifft ein hydrostatisches Antriebssystem für Fahrzeuge, mit einer vom Fahrzeugmotor angetriebenen Hauptpumpe, die den Betriebsdruck für einen hydraulischen Antriebskreis mit mindestens einem ein Fahrzzeugrad antreibenden Hydraulikmotor erzeugt, einer vom Fahrzeugmotor angetriebenen Hilfspumpe, die einen hydraulischen Hilfskreis mit Druckmittel zum Betätigen mindestens einer Hilfseinrichtung wie Lenkung, Bremse und dgl. beaufschlagt, und einem umschaltbaren Notventil, das in geöffneter Stellung den Hilfskreis mit dem Antriebskreis derart verbindet, daß dem Hilfskreis Druckmittel zuführbar ist, welches bei Stillstand von Haupt- und Hilfspumpe von dem vom drehenden Fahrzeugrad angetriebenen Hydraulikmotor des Antriebskreises gefördert wird.

Ein derartiges Antriebssystem ist aus der DE-OS 37 32 662 und aus der EP-OS 0 085 272 bekannt. Mit einem solchen Antriebssystem wird erreicht, daß das Fahrzeug auch dann, wenn während der Fahrt der Antriebsmotor ausfällt, noch lenk- und bremsfähig bleibt. Der zum Betätigen von Lenkung und/oder Bremse benötigte Hydraulikdruck wird in diesem Fall von den den Fahrzeugrädern zugeordneten Hydraulikmotoren erzeugt, die in einem solchen Betriebszustand von den Fahrzeugrädern angetrieben werden und als Pumpe arbeiten. Ein solcher Betriebszustand kann beispielsweise beim Abschleppen eines defekten Fahrzeuges auftreten. Eine besonders bevorzugte Anwendung des erfindungsgemäßen Antriebssystems ergibt sich bei einem Schleppfahrzeug für Flugzeuge. Hier besteht aus Sicherheitsgründen die unbedingte Forderung, daß bei einem Versagen des Fahrzeugmotors während der Fahrt das Fahrzeug zusammen mit dem geschleppten Flugzeug noch lenk- und bremsbar bleiben muß, da anderenfalls das Risiko eines Totalschadens an dem geschleppten Flugzeug besteht.

Die vorbekannten Antriebssysteme weisen Hydraulikmotoren mit konstantem Verdrängungsvolumen auf. Dadurch ist von selbst sichergestellt, daß sie in dem beschriebenen Betriebszustand, wenn sie von den umlaufenden Fahrzeugrädern angetrieben werden, als Pumpe arbeiten können und das für den Betrieb der Hilfseinrichtung wie Lenkung und/oder Bremse benötigte Fördervolumen erbringen können.

Es kann jedoch in vielen Fällen erwünscht sein, das Fahrzeug mit Hydraulikmotoren auszustatten, deren Verdrängungsvolumen steuerbar und bis auf Null reduzierbar ist. Dadurch kann das Antriebsdrehmoment für jedes einzelne angetriebene Fahrzeugrad individuell geregelt werden. Für ein Antriebssystem der eingangs genannten Art sind solche Motoren mit bis auf Null reduzierbarem Verdrängungsvolumen, sogenannte Nullhubmotoren, jedoch nicht ohne weiteres verwendbar, weil die Gefahr besteht, daß der Notfall, d.h. ein Ausfallen des Fahrzeugmotors oder der von ihm angetriebenen Haupt- und Hilfspumpe, in einem Zeitpunkt auftritt, in welchem die Hydraulikmotoren sich in der Steuerstellung mit Verdrängungsvolumen Null befinden. Sie wären dann nicht in der Lage, im Abschlepp- oder Schiebebetrieb Druckmittel zu fördern, welches im Hilfskreis zur Betätigung von Lenkung und/oder Bremse benötigt wird.

Der Erfindung liegt die Aufgabe zugrunde, ein Antriebssystem der eingangs genannten Art anzugeben, bei dem die Vorteile von Nullhubmotoren genutzt werden können, ohne daß die Notversorgung des Hilfskreises beeinträchtigt wird.

Zur Lösung der Aufgabe ist erfindungsgemäß vorgesehen, daß der oder jeder Hydraulikmotor ein steuerbares und bis auf Null reduzierbares Verdrängungsvolumen aufweist, daß eine Reglereinrichtung zum selbsttätigen Steuern des Verdrängungsvolumens vorgesehen ist, und daß die Regeleinrichtung derart in Abhängigkeit vom Betriebsdruck im Antriebskreis arbeitet, daß sie eine Reduzierung des Verdrängungsvolumens auf Null nur dann zuläßt, wenn im Antriebssystem der von der Hauptpumpe erzeugte Betriebsdruck vorhanden ist.

Das erfindungsgemäße Antriebssystem bietet den Vorteil, daß im normalen Fahrzustand die Möglichkeit, das Verdrängungsvolumen und damit das Drehmoment eines oder mehrerer Hydraulikmotoren bis auf Null zu reduzieren, voll ausgenutzt werden kann. Dies kann z.B. unter Steuerung durch eine an sich bekannte Anti-Schlupf-Regelung erfolgen, die durch Reduzierung des Drehmomentes das Durchdrehen eines oder mehrerer angetriebener Fahrzeugräder verhindert.

Andererseits ist aber sichergestellt, daß im Abschlepp- oder Schiebebetrieb bei stillstehendem Fahrzeugmotor jeder der Hydraulikmotoren, wenn er durch das zugehörige, sich drehende Fahrzeugrad angetrieben wird, als Pumpe mit ausreichendem Fördervolumen arbeitet, um über das geöffnete Notventil den Hilfskreislauf mit Druckmittel zum Betätigen der Lenkung, Bremse oder dgl. zu versorgen.

Weitere vorteilhafte Ausgestaltungen der Erfindung sind in den Unteransprüchen angegeben.

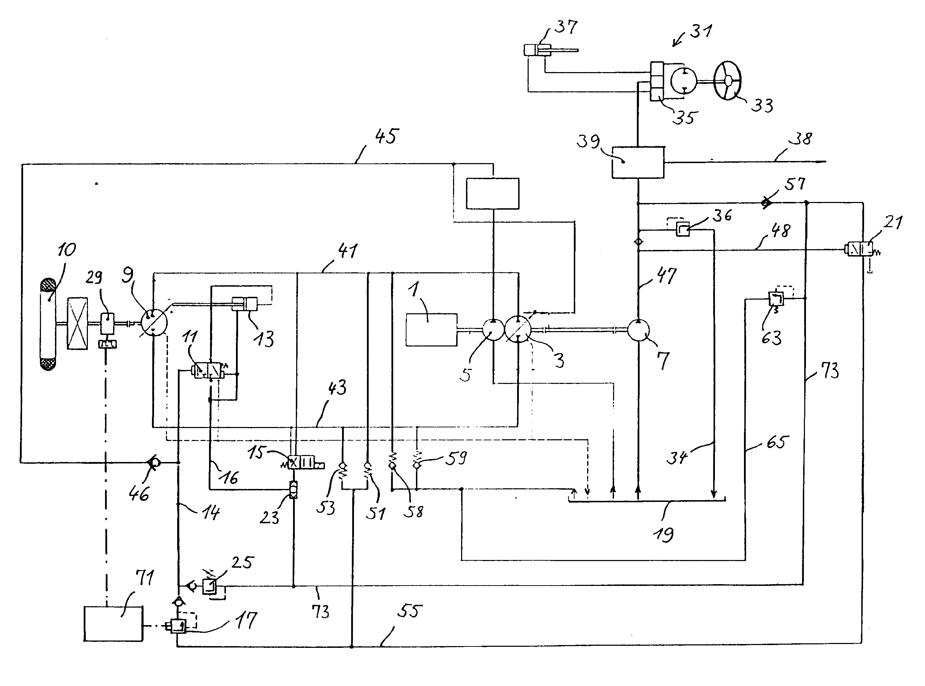

Eine Ausführungsform der Erfindung wird anhand der Zeichnung erläutert, die ein vereinfachtes Fließschema des Antriebssystems darstellt.

Der Fahrzeugmotor 1, d.h. die Brennkraftmaschine des Fahrzeugs, ist mechanisch mit einer Hauptpumpe 3, einer Steuerpumpe 5 und einer Lenkpumpe 7 gekoppelt, um diese anzutreiben. Die Hauptpumpe 3 ist über Leitungen 41, 43 mit einem Hydraulikmotor 9 verbunden, der als Fahrmotor ein Rad 10 des Fahrzeugs antreibt. Vorzugsweise ist jedes der Räder des Fahrzeugs durch einen eigenen Hydraulikmotor 9 angetrieben, wobei sämtliche Hydraulikmotoren parallel zueinander zwischen die Leitungen 41 und 43 geschaltet sind. In der Zeichnung ist der Einfachheit halber nur ein einziger Hydraulikmotor 9 mit zugehörigem Fahrzeugrad 10 dargestellt.

Die Steuerpumpe 5 saugt Druckmittel aus dem Druckmitteltank 19 des Systems an und erzeugt in einer Steuerleitung 45 einen von der Drehzahl des Fahrzeugmotors 1 abhängigen Steuerdruck. Die Hauptpumpe 3 ist eine Verstellpumpe. Ihr Fördervolumen wird mittels des in der Leitung 45 herrschenden Steuerdrucks verändert, derart, daß mit zunehmender Drehzahl des Fahrzeugmotors 1 die Förderleistung der Hauptpumpe 3 verringert wird.

Die Lenkpumpe 7 saugt Druckmittel aus dem Tank 19 an und erzeugt in der Leitung 47 einen Betriebsdruck zum Betätigen einer Hilfseinrichtung des Fahrzeugs, z.B. der hydraulisch betätigten Lenkung 31. Diese umfaßt ein vom Lenkrad 33 des Fahrzeugs betätigbares Lenkventil 35, welches Druckmittel aus der Leitung 47 wahlweise in den einen oder anderen Arbeitsraum des hydraulischen Lenkzylinders 37 pumpt. Rückleitungen, durch die das Druckmittel aus dem jeweils anderen Arbeitsraum des Lenkzylinders 37 in den Tank 19 zurückfließen kann, sind in der Zeichnung der einfachheit halber nicht dargestellt. Über eine Leitung 38 können weitere Hilfseinrichtungen mit von der Hilfspumpe 5 gefördertem Druckmittel beaufschlagt werden, wie z.B. eine hydraulisch betätigbare Bremse oder eine hydraulische Einrichtung zum Lösen einer automatischen Feststellbremse. Die Zuführung des Druckmittels zu den verschiedenen Hilfseinrichtungen kann durch ein Prioritätsventil 39 gesteuert werden. Zum Schutz der Hilfspumpe 7 vor Überlastung ist ein Überdruckventil 36 in einer zum Tank 19 zurückführenden Leitung 34 vorgesehen.

Die Hauptpumpe 3, die Leitungen 41 und 43 sowie der Hydraulikmotor 9 bzw. die weiteren (nicht dargestellten) Hydraulikmotoren bilden den Antriebskreis. Die Leitungen 41, 43 sind über je ein Rückschlagventil 51, 53 mit einer Verbindungsleitung 55 verbunden, die über ein Notventil 21 und ein Rückschlagventil 57 mit der zum Hilfskreis, d.h. zum Lenksystem 31 führenden Leitung 47 verbindbar ist. Das Notventil 21 wird über eine Steuerleitung 48 selbsttätig in Abhängigkeit von dem Druck in der Leitung 47 betätigt. Erzeugt die Lenkpumpe 7 einen ausreichenden Druck in der Leitung 47, so befindet sich das Notventil 21 in der Sperrstellung. Fällt der Druck in der Leitung 47 unter einen unteren Grenzwert ab, z.B. wegen defekter Lenkpumpe 7 oder wegen Stillstand des Fahrzeugmotors 1, dann schaltet das Notventil 21 in die in der Zeichnung dargestellte geöffnete Stellung und verbindet somit über die Leitung 55 den Antriebskreis mit dem Hilfskreis. Die Hilfseinrichtung, wie Lenkung 31, Bremse oder dgl., wird dann mit Druckmittel aus dem Antriebskreis versorgt. Falls zu diesem Zeitpunkt die Hauptpumpe 3 noch läuft, wird das Druckmittel von der Hauptpumpe 3 geliefert. Wenn auch die Hauptpumpe 3 still-steht, z.B. weil der Fahrzeugmotor 1 ausgefallen ist, dann wird, falls das Fahrzeug geschleppt oder geschoben wird, jeder Hydraulikmotor 9 von dem zugeordneten Fahrzeugrad 10 angetrieben und arbeitet als Pumpe, die Druckmittel, je nach Fahrtrichtung, über das Rückschlagventil 51, 53 in die Leitung 55 fördert. Diese aus dem Antriebskreis entnommene Druckmittelmenge gelangt nicht wieder in den Antriebskreis zurück, da sie aus z.B. dem Lenksystem 31 direkt in den Tank 19 zurückläuft. Um den Druckmittelverlust im Antriebskreis auszugleichen, sind die Leitungen 41, 43 über weitere Rückschlagventile 58, 59 und eine Saugleitung 61 mit dem Tank 19 verbunden. Ein Mengenbegrenzungsventil 63 begrenzt die Menge des über das Notventil 21 zur Leitung 47 zugeführten Druckmittels und leitet überschüssiges Druckmittel über die Leitung 65 und eines der Rückschlagventile 58, 59 direkt zum Motor 9 zurück.

Der das Rad 10 antreibende Hydraulikmotor 9 ist von an sich bekannter Konstruktion mit veränderbarem Verdrängungsvolumen oder Hub. Insbesondere kann es sich um einen Motor handeln, dessen Hub durch eine umlaufende, zu ihrer Achse schräggestellte Steuerscheibe gesteuert wird, wobei der Winkel der Steuerscheibe zur Achse, zwischen einem Maximalwert und Null verstellbar ist. Zum Verändern des Hubes dient ein Stellorgan in Form eines Hydraulikzylinders 13. Beide Arbeitsräume des Zylinders 13 sind mit Arbeitsdruck aus einer Leitung 16 beaufschlagbar, die mit dem kolbenstangenseitigen Arbeitsraum des Zylinders 13 direkt und mit dem kolbenseitigen Arbeitsraum über ein Steuerventil 11 verbunden ist. Im Normalbetrieb ist die Leitung 16 mit dem von der Pumpe 3 in der Leitung 41 oder 43 erzeugten Betriebsdruck beaufschlagt, und zwar je nach der jeweiligen Fahrtrichtung über ein umschaltbares Fahrtrichtungsventil 15. Leckölleitungen zur Rückführung von Leck- und Überschußöl von der Hauptpumpe 3, dem Hydraulikmotor 9 und dem Steuerventil 11 zum Tank 19 sind in der Zeichnung gestrichelt dargestellt.

Das Steuerventil 11 ist durch einen Steuerdruck des Druckmittels in einer Steuerleitung 14 gegen die Kraft einer Rückstellfeder verschiebbar. Bei fehlendem Steuerdruck in der Leitung 14 befindet sich das Steuerventil 11 in der gezeigten Stellung, in der die Zufuhr von Druckmittel aus der Leitung 16 zur kolbenseitigen Kammer des Zylinders 13 gesperrt ist. Der Kolben des Zylinders 13 ist deshalb durch den in dem stangenseitigen Arbeitsraum herrschenden Druck ganz nach rechts verschoben, und der Motor 9 befindet sich in der Stellung mit maximalem Hub bzw. maximalem Verdrängungsvolumen. Mit zunehmendem Steuerdruck in der Leitung 14 wird das Steuerventil 11 zunehmend nach rechts verschoben und gibt zunehmend die Zufuhr von Druckmittel aus der Leitung 16 in den kolbenseitigen Arbeitsraum des Zylinders 13 frei, so daß dessen Kolben aufgrund der größeren Wirkfläche nach links verschoben und dadurch der Hub des Hydraulikmotors 9 verringert wird, und zwar im Extremfall bis auf Null, wenn der Steuerdruck in der Leitung 14 ausreichend hoch ist.

Der Steuerdruck in der Leitung 14 wird im normalen Fahrbetrieb durch zwei verschiedene Quellen erzeugt. Einerseits wird der von der Steuerpumpe 5 drehzahlabhängig erzeugte Steuerdruck über die Leitung 45 und ein Rückschlagventil 46 der Leitung 14 zugeführt, wodurch mit zunehmender Drehzahl des Fahrzeugmotors 1 der Hub des oder jedes Hydraulikmotors 9 und damit auch sein Drehmoment, verringert wird. Andererseits wird Steuerdruck in der Leitung 14 erzeugt durch ein zu einer Anti-Schlupf-Regelung gehörendes Ventil 17, welches mit dem von der Hauptpumpe 3 in den Leitungen 41, 43 erzeugten Betriebsdruck z.B. über die Leitung 55 beaufschlagt ist. Das Ventil 17 wird elektrisch gesteuert durch eine an sich bekannte Anti-Schlupf-Regelung 71, welche ein Eingangssignal von einem die Drehung des Rades 10 erfassenden Umdrehungssensor 29, sowie weitere Eingangssignale von nicht dargestellten Sensoren erhält. Stellt die Anti-Schlupf-Regelung 71 fest, daß z.B. beim Anfahren das betreffende Fahrzeugrad 10 durchdreht, so wird das Ventil 17 aufgesteuert, so daß der Betriebsdruck aus der Leitung 55 als Steuerdruck über die Leitung 14 an das Steuerventil 11 gelangt und dieses vollständig nach rechts verschiebt, wodurch der kolbenseitige Arbeitsraum des Zylinders 13 mit dem vollen Arbeitsdruck des Druckmittels aus der Leitung 16 beaufschlagt wird. Dadurch wird der Hub des Hydraulikmotors 9 bis auf Null reduziert.

Wenn der Fahrzeugmotor 1 und damit die Steuerpumpe 5, Hauptpumpe 3 und Lenkpumpe 7 stillstehen, ist kein Arbeitsdruck mehr für die Beaufschlagung des Stellzylinders 13 vorhanden, so daß auch der Hub des Hydraulikmotors 9 nicht mehr auf Null reduziert werden kann. Vielmehr wird der Motor 9 auf maximalen Hub eingestellt. Damit ist gewährleistet, daß im Abschlepp- oder Schiebbetrieb, bei geöffnetem Notventil 21, der Hydraulikmotor 9 in der Lage ist, als Pumpe zu arbeiten und Druckmittel über die Leitung 55 und das Notventil 21 zum Lenkkreis 31 oder anderen Hilfseinrichtungen zu fördern.

Es kann aber auch in dem beschriebenen Notbetrieb vorteilhaft sein, das Verdrängungsvolumen des als Pumpe arbeitenden Motors 9 zu steuern und zu begrenzen. Zum Beispiel kann dadurch verhindert werden, daß der als Pumpe arbeitende Hydraulikmotor 9 unnötig große Druckmittelmengen fördert, die für den Notbetrieb des Lenksystems 31 nicht benötigt werden und nutzlos als Überschußmenge in den Tank 19 gefördert werden. Zur Steuerung des Hubes des Motors 9 auch im Notbetrieb ist eine vom Notventil 21 beaufschlagte Leitung 73 vorgesehen, die einerseits über ein Wechselventil 23 an die Leitung 16 und andererseits über ein Druckbegrenzungsventil 25 an die Steuerdruckleitung 14 angeschlossen ist. Wenn der Motor 9 im Schiebebetrieb als Pumpe arbeitet, gelangt das von ihm gepumpte und vom Notventil 21 durchgelassene Druckmittel über die Leitung 73, das Wechselventil 23 (ein doppeltes Rückschlagventil) und die Leitung 16 zum kolbenstangenseitigen Arbeitsraum des Zylinders 13, wodurch der Motor 9 auf maximalen Hub, d.h. maximales Fördervolumen, eingestellt wird. Übersteigt jedoch bei zunehmender Drehzahl des Fahrzeugrades 10 der vom Hydraulikmotor erzeugte Förderdruck in der Leitung 73 einen Maximalwert, der durch Einstellung des Druckbegrenzungsventils 25 vorgegeben ist, so öffnet das Druckbegrenzungsventil 25, so daß der Druck aus der Leitung 73 über die Leitung 14 zum Steuerventil 11 gelangt und dieses nach rechts verschiebt. Dadurch kann Druck aus der Leitung 73 über das Ventil 23, die Leitung 16 und das Ventil 11 auch zum kolbenseitigen Arbeitsraum des Zylinder 13 gelangen, wodurch der Motor 9 in Richtung auf kleineren Hub verstellt wird, und zwar solange, bis der durch das Ventil 25 vorgegebene, maximal benötigte Förderdruck wieder erreicht ist. Auf diese Weise wird auch im Abschlepp- oder Schiebebetrieb eine Steuerung und Begrenzung des Hubes des Hydraulikmotors 9 erreicht, wobei jedoch eine Reduzierung dieses Hubes auf Null in diesem Betriebszustand nicht möglich ist.

## Patentansprüche

1. Hydrostatisches Antriebssystem für Fahrzeuge, mit einem hydraulischen Antriebskreis, der eine vom Fahrzeugmotor (1) angetriebene Hauptpumpe (3) und mindestens einen von dieser beaufschlagten, mit einem Antriebsrad (10) drehverbundenen Hydraulikmotor(9) umfaßt, einer vom Fahrzeugmotor (1) angetriebenen Hilfspumpe (7), die einen hydraulischen Hilfskreis mit Druckmittel zum Betätigen mindestens einer Hilfseinrichtung (31) wie Lenkung, Bremse oder dgl. beaufschlagt, und einem umschaltbaren Notventil (21), das in geöffneter Stellung den Hilfskreis mit dem Antriebskreis derart verbindet, daß bei Stillstand von Haupt- und Hilfspumpe Druckmittel, welches von dem vom drehenden Fahrzeugrad (10) angetriebenen Hydraulikmotor (9) gefördert wird, dem Hilfskreis zuführbar ist, dadurch **gekennzeichnet**, daß der oder jeder Hydraulikmotor (9) ein steuerbares und bis auf Null reduzierbares Verdrängungsvolumen aufweist,
daß eine Regeleinrichtung (11, 13) zum selbsttätigen Steuern des Verdrängungsvolumens vorgesehen ist,
und daß die Regeleinrichtung (11, 13) derart ausgebildet ist, daß sie eine Reduzierung des Verdrängungsvolumens des Hydraulikmotors (9) auf Null verhindert, wenn die Hilfspumpe (7) und/oder die Hauptpumpe (3) stillsteht und/oder das Notventil (21) geöffnet ist.

2. Antriebssystem nach Anspruch 1, dadurch **gekennzeichnet**, daß die Regeleinrichtung ein mit dem von der Hauptpumpe (3) erzeugten Druckmitteldruck beaufschlagbares Stellorgan (13) zur Veränderung des Hubs des Motors (9), ein Steuerventil (11) zum Steuern der Zuführung des Druckmittels zu dem Stellorgan (13), und mindestens eine Einrichtung (5; 17, 71) zum Erzeugen eines das Steuerventil (11) steuernden Steuerdrucks aufweist.

3. Antriebssystem nach Anspruch 2, dadurch **gekennzeichnet,** daß der Steuerdruck durch eine vom Fahrzeugmotor (1) angetriebene Hilfspumpe (5) in Abhängigkeit von der Drehzahl des Fahrzeugmotors (1) erzeugbar ist.

4. Antriebssystem nach Anspruch 2, dadurch **gekennzeichnet**, daß die Regeleinrichtung eine Anti-Schlupf-Regelung (71) aufweist, die mittels eines Ventils (17) einen vom Betriebsdruck der Hauptpumpe (3) abgeleiteten Steuerdruck für das Steuerventil (11) erzeugt.

5. Antriebssystem nach einem der Ansprüche 1 bis 4, dadurch **gekennzeichnet,** daß das Verdrängungsvolumen des Hydraulikmotors (9) bei geöffneten Notventil (21) derart steuerbar ist, daß der von dem als Pumpe arbeitenden Hydraulikmotor (9) erzeugte Förderdruck auf einen Maximalwert begrenzt ist.

## Claims

1. Hydrostatic drive system for vehicles, comprising a hydraulic drive circuit, which contains a main pump (3) driven from the vehicle engine (1) and at least one hydraulic motor (9), actuated by the pump and rotatably coupled to a driving wheel (10), an auxiliary pump (7) driven from the vehicle engine (1), which loads a hydraulic auxiliary circuit with pressurized fluid for actuating at least one auxiliary device (31) such as steering gear, brake or the like, and a switchable emergency valve (21) which, in the opened position, connects the auxiliary circuit with the drive circuit in such a manner that, when the main and auxiliary pumps are stopped, pressurized fluid which is supplied from the hydraulic motor (9) driven by the rotating vehicle driving wheel (10) can be supplied to the auxiliary circuit, characterized in that the or each hydraulic motor (9) possesses a controllable displacement volume which can be reduced to zero, that a regulating device (11, 13) for automatically regulating the displacement volume is provided, and that the regulating device (11, 13) is so constructed that it prevents a reduction of the displacement volume of the hydraulic motor (9) to zero when the auxiliary pump (7) and/or the main pump (3) stops and/or the emergency valve (21) is opened.

2. Drive system according to Claim 1, characterized in that the regulating device comprises an actuator (13), loadable with the fluid pressure generated by the main pump (3), for changing the stroke of the motor (9), a control valve (11) for controlling the feed of the pressurized fluid to the actuator (13) and at least one device (5; 17, 71) for generating a control pressure for controlling the control valve (11).

3. Drive system according to Claim 2, characterized in that the control pressure can be generated, as a function of the rotational speed of the vehicle engine (1), by an auxiliary pump (5) driven from the vehicle engine (1).

4. Drive system according to Claim 2, characterized in that the regulating device possesses an anti-slip control (71), which generates a control pressure for the control valve (11), derived from the operating pressure of the main pump (3), by means of a valve (17).

5. Drive system according to one of Claims 1 to 4, characterized in that the displacement volume of the hydraulic motor (9) when the emergency valve (1) is opened is controllable in such a manner that the delivery pressure created by the hydraulic motor (9) operating as a pump is limited to a maximum value.

## Revendications

1. Système hydrostatique de commande pour véhicule, comprenant a) un circuit hydraulique d'entraînement, qui est composé d'une pompe principale (3), entraînée par le moteur (1) du véhicule et d'au moins un moteur hydraulique (9), qui est alimenté par cette pompe et qui est solidaire en rotation d'une roue motrice (10), b) une pompe auxiliaire (7), qui est entraînée par le moteur (1) du véhicule et qui alimente en fluide sous pression un circuit hydraulique auxiliaire destiné à actionner au moins un équipement auxiliaire (31) -direction, freins, etc..., et c) un distributeur de secours (21) réversible qui, ouvert, fait communiquer ce circuit auxiliaire avec le circuit d'entraînement de manière que, lorsque les pompes principale et auxiliaire sont immobilisées, du fluide sous pression, qui est fourni par le moteur hydraulique (9), entraîné par la roue (10) qui tourne en roulant, soit délivré à ce circuit auxiliaire, ce système étant caractérisé en ce que
le moteur hydraulique (9) -ou chacun d'eux- a une cylindrée réglable et pouvant être réduite jusqu'à devenir nulle ;
le système comporte un dispositif pilote (11, 13) destiné à réguler automatiquement cette cylindrée ; et
ce dispositif pilote (11, 13) est agencé de façon à empêcher que la réduction de la cylindrée du moteur (9) n'arrive à une valeur nulle lorsque la pompe auxiliaire (7) et/ou la pompe principale (3) sont arrêtées et/ou que le distributeur de secours (21) est ouvert.

2. Système de commande selon la revendication 1, caractérisé en ce que le dispositif pilote comporte un organe de régulation (13), qui peut être soumis à la poussée du fluide sous pression délivré par la pompe principale (3) et qui est destiné à modifier la course du moteur (9), un distributeur pilote (11), destiné à commander la délivrance du fluide à cet organe de régulation (13) et au moins un dispositif (5 ; 17 ; 71) destiné à créer une pression pilote actionnant ce distributeur pilote (11).

3. Système de commande selon la revendication 2, caractérisé en ce que la pression pilote peut être créée, en fonction de la vitesse du moteur (1) du véhicule, par une pompe auxiliaire (5) entraînée par ce moteur (1).

4. Système de commande selon la revendication 2, caractérisé en ce que le dispositif pilote comporte un dispositif régulateur (71) anti-patinage, qui crée au moyen d'une soupape (17) une pression pilote de commande du distributeur pilote (11), dérivée de la pression de service de la pompe principale (3).

5. Système de commande selon l'une des revendications 1 à 4, caractérisé en ce que lorsque le distributeur de secours (21) est ouvert, la cylindrée du moteur hydraulique (9) peut être réglée de façon à limiter à une valeur maximale la pression de refoulement de ce moteur (9) fonctionnant en pompe.
